# EUROPEAN PATENT APPLICATION

(11) **EP 1 975 361 A2**
(43) Date of publication of application: **01.10.2008**
(21) Application number: 08153381.2
(22) Date of filing: 27.03.2008
(51) Int. Cl.: E05F 15/00, E05F 15/20

(54) **Control apparatus of opening and closing body for vehicle**

(30) Priority: 29.03.2007 JP 2007089485
(71) Applicant: AISIN SEIKI KABUSHIKI KAISHA, Kariya-shi, Aichi-ken 448-8650 (JP)
(72) Inventor: Takeda, Nobuhiko, c/o Aisin Seiki Kabushiki Kaisha, Kariya-shi Aichi 448-8650 (JP); Sugiura, Takehiko, c/o Aisin Seiki Kabushiki Kaisha, Kariya-shi Aichi 448-8650 (JP)
(74) Representative: TBK-Patent

(57) **Abstract**

A control apparatus of an opening and closing body for a vehicle includes a fully closed state detection means (22) detecting a fully closed state of an opening and closing body for the vehicle (2), an authenticating means (11) authenticating a user of the vehicle, a detection means (4) detecting a command for an opening operation when the authenticating means (11) and the portable unit (60) authenticate each other, a driving means (35) conducting the opening operation when the fully closed state and the command for the open operation are detected, wherein the detection means (4) is a vibration sensor mounted at one of the opening (1a) and a butted surface of the opening and closing body for the vehicle (2), and the vibration sensor detects that an object is pinched between the opening (1) and the opening and closing body for the vehicle (2) at a closing operation.

## Description

### FIELD OF THE INVENTION

This relates to a control apparatus of an opening and closing body for a vehicle.

### BACKGROUND

A door opening and closing apparatus for a vehicle, having a locking system such as Smart entry system (registered trademark) for automatically unlocking and locking a vehicle door serving as an opening and closing body for a vehicle, is known. In this system, a user of a vehicle, i.e. a driver, owns (carries) a portable unit such as an electrical key or an electrical card for authenticating hunself or herself as a legitimate user. The system detects the user that approaches or gets out from the vehicle by communicating with the portable unit. Further, the system recognizes the user's commands for the vehicle door to unlock or lock and controls the vehicle door accordingly.

A proposal to provide a sensing electrode at a door handle, which opens and closes the vehicle door, is disclosed in JP 2002-295064A. The configuration is meant for recognizing the commands for the vehicle door to lock and unlock in the door opening and closing apparatus for the vehicle having this type of system. In the door opening and closing apparatus for the vehicle, capacitance formed between the sensing electrode and the vehicle door is utilized. The door opening and closing apparatus for the vehicle detects change in the capacitance, caused when the user inserts his/her hand between the sensing electrode and the vehicle door, and recognizes the commands of the user.

However, in the door opening and closing apparatus for the vehicle disclosed in JP 2002-295064A, the capacitance changes when an object, having a medium constant which is different from air, exists between the sensing electrode and the vehicle door, even if the object is not the user's hand. Thus, the change in the capacitance may be detected due to environmental changes such as rain, leading to false detection. In particular, when the system is applied to the door opening and closing apparatus for the vehicle which automatically unlocks and opens the vehicle door, the vehicle door may open by the false detection.

Further, when opening the vehicle door, the user has to insert his/her hand between the vehicle body and the door handle. Thus, the user is unable to conduct the opening operation when both hands are occupied. A need thus exists to provide a control apparatus of an opening and closing body for a vehicle which improves operability in opening the opening and closing body for a vehicle and prevents false detection.

### SUMMARY OF THE INVENTION

According to an aspect of the present invention, A control apparatus of an opening and closing body for a vehicle includes a fully closed state detection means detecting a fully closed state of an opening and closing body for the vehicle in which the opening and closing body for the vehicle is fully closed, the opening and closing body for the vehicle opening and closing an opening formed at a vehicle body, an authenticating means mounted at the vehicle and authenticating a person as a user of the vehicle by communicating with a portable unit, a detection means detecting a command for an opening operation of the opening and closing body for the vehicle,when the authenticating means and the portable unit authenticate each other, and a driving means conducting the opening operation of the opening and closing body for the vehicle when the fully closed state of the opening and closing body for the vehicle is detected by the fully closed state detection means and the command for the open operation of the opening and closing body for the vehicle is detected, wherein the detection means is a vibration sensor mounted at one of the opening of the vehicle body and a butted surface of the opening and closing body for the vehicle with which the opening is butted when the opening and closing body for the vehicle is in the fully closed state, and the vibration sensor detects that an object is pinched between the opening and the opening and closing body for the vehicle at the time of a closing operation.

According to the above-described configuration, the user (driver) carrying the authenticated portable unit generates vibration in the opening and closing body for the vehicle by knocking the opening and closing body for the vehicle, and the sensor serving as the detection sensor recognizes the command for the opening operation of the opening and closing body for the vehicle. Further, the command for the opening operation of the opening and closing body for the vehicle is detected in the fully closed state when the pinching detection is not needed. Hence, the detection of the command for the opening operation does not disturb the pinch detection function. As just described, the vibration sensor for the pinch detection is also used as the vibration sensor for detecting the command for the opening operation of the opening and closing body for the vehicle, thereby reducing the number of the components, compared to when a specialized sensor is provided. Further, the user may command the opening and closing body of the vehicle to open by generating the vibration in the opening and closing body for the vehicle. For example, even when both hands are occupied, the user may open the opening and closing body for the vehicle by tapping the opening and closing body for the vehicle with a foot.

The detection means (4) distinguishes the vibration caused by the object being pinched from the vibration in the opening and closing body for the vehicle (2) or the vehicle body (1) caused by the command for the opening operation of the opening and closing body for the vehicle (2) based on the frequency of the vibration.

Normally, the frequency of the vibration caused by the object pinched is smaller than the frequency of the vibration generated in the opening and closing body for the vehicle or the vehicle body, i.e. , the resonance frequency of the vehicle in which the vibration is generated. In the configuration, the distinction of the vibrations is made based on the frequency of the vibration. Thus, even if the vibration sensor for the pinch detection is also used as the vibration sensor for detecting the command for the opening operation of the opening and closing body for the vehicle, the false detection may be prevented in both the detections.

According to the configuration, the operability in the open operation of the opening and closing body for the vehicle is improved and the false operation is prevented.

### BRIEF DESCRIPTION OF THE DRAWINGS

The foregoing and additional features and characteristics of the present invention will become more apparent from the following detailed description considered with reference to the accompanying drawings, wherein:

Fig.1 is a perspective view showing a vehicle to which an embodiment of the invention is applied;

Fig. 2 is a block diagram showing an on-board unit;

Fig. 3 is a block diagram showing a portable unit;

Fig. 4 is a flowchart schematically showing an operational flow of the embodiment; and

Fig. 5 is a flowchart schematically showing an operational flow of a modification of the embodiment.

### DETAILED DESCRIPTION

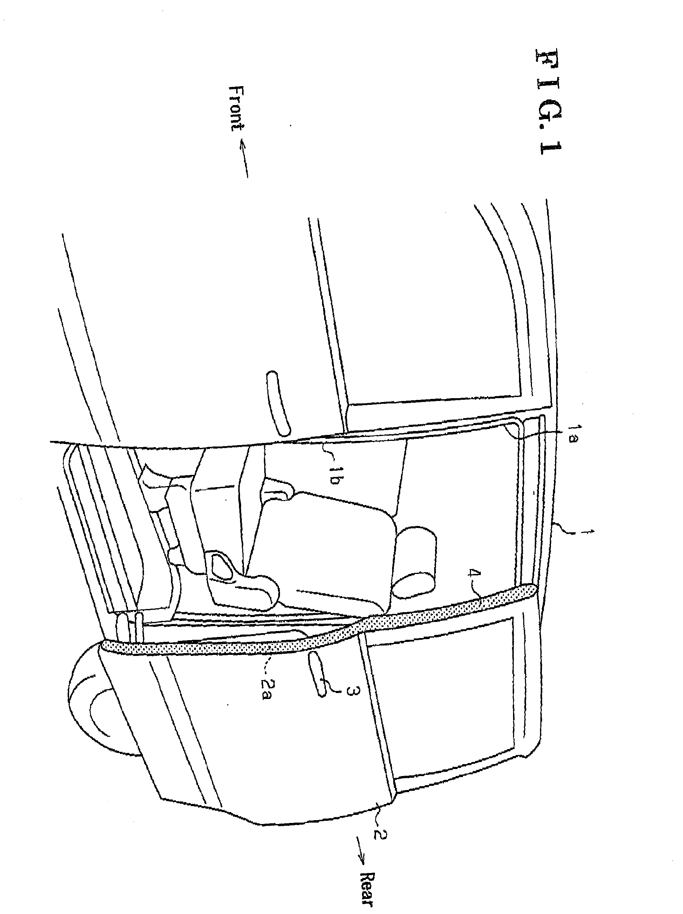

Hereinafter, an embodiment of the invention is described with reference to drawings. Fig. 1 is a perspective view showing a vehicle such as an automobile to which the invention is applied. As shown in Fig. 1, a vehicle body 1 is formed with an opening 1a at a side thereof, and a slide door 2, serving as an opening and closing body for a vehicle, is supported by the vehicle body 1 so as to be movable in a longitudinal direction. The door opening and closing body for the vehicle is meant for opening and closing the opening 1a. A door handle 3, used for opening and closing the slide door 2 manually, is mounted on an outer panel of the slide door 2.

A front end surface of the opening 1a is formed with a butted surface 1b and a front end surface of the slide door 2 is formed with a butted surface 2a. The butted surface 1b and the butted surface 2a are butted when the side door 2 is fully closed. A piezoelectric vibration sensor 4, serving as a detection means, is mounted on the butted surface 2a of the slide door 2. The vibration sensor 4 is vertically elongated in accordance with the form of the butted surface 2a. The vibration sensor 4 detects an object caught between the opening 1a and the slide door 2 (the butted surfaces 1b and 2a) by detecting a vibration having a frequency of approximately 10Hz. Further, the vibration sensor 4 detects a vibration generated at the slide door 2 or the vehicle body 1 by detecting a vibration having a frequency of approximately 10OHz. The frequency of the vibration of the slide door 2 or the vehicle body 1 corresponds to a resonance frequency of the vehicle in which the vibration is generated. The vibration of the slide door 2 is utilized for detecting a user's command for the opening operation.

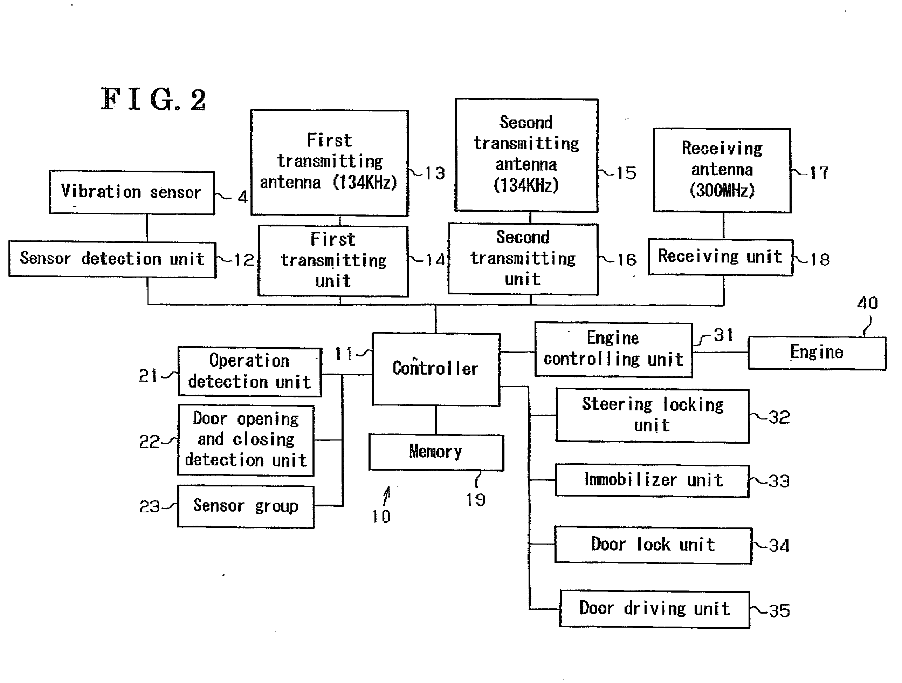

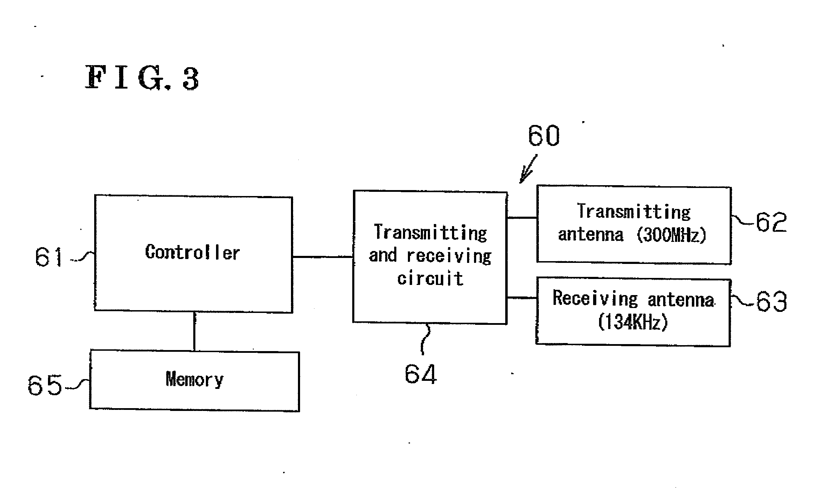

Fig 2 is a block diagram showing an on-board unit 10 and Fig. 3 is a block diagram showing a portable unit 60. The on-board unit 10 and the portable unit 60 comprises Smart entry system (registered trademark) of a vehicle serving as a control apparatus of an opening and closing body for a vehicle according to the embodiment. The on-board unit 10 is mounted at the vehicle and the portable unit 60 is owned (carried) by a legitimate user of the vehicle such as an owner of the vehicle and a driver.

As shown in Fig. 2, a vibration sensor 4 is connected with a controller 11 via a sensor detection unit 12. The controller 11 serves as an authenticating means controlling various functions of the on-board unit 10. The sensor detection unit 12 provides a predetermined amplification and the like to a detection signal of the vibration sensor 4 to output the signal to the controller 11. Then, the controller 11 detects an object that is pinched by the opening 1a and the slide door 2, or the user's command for the opening operation based on the signal transmitted from the sensor detection unit 12.

In addition, a memory 19 is connected with the controller 11, and various different codes such as a request code or a transponder ID code are stored in the memory 19. Meanwhile, the memory 19 is a nonvolatile memory such as an EEPROM and is able to maintain the stored data when the power source is shut off.

Further, a first transmitting antenna 13, incorporated into the vehicle door handle 3 and communicating with the outside of the vehicle, is connected to the controller 11 via a first transmitting unit 14. Furthermore, a second transmitting antenna 15, incorporated into an instrument panel and communicating with the inside of the vehicle, is connected to the controller 11 via a second transmitting unit 16.

The controller 11 loads the request codes from the memory 19 and transmits the request codes to the first and second transmitting units 14 and 16. Then, the request codes are respectively modulated to, for example, a signal having frequency of 134 KHz and the modulated signals are transmitted from the first transmitting unit 14 and the second transmitting unit 16. The first transmitting unit 14 transmits a vehicle outside request signal from the first transmitting antenna 13 to the portable unit 60 and the second transmitting unit 16 transmits a vehicle inside request signal from the second transmitting antenna 15 to the portable unit 60.

Further, a receiving antenna 17 is connected with the controller 11 via a receiving unit 18. The receiving antenna 17 is mounted to an inner mirror in the inside of the vehicle and receives the signal transmitted from the portable unit 60. A signal transmitted from the portable unit 60, having a frequency of 300MHz for example, is demodulated in the receiving unit 18 to be output to the controller 11.

An operation detection unit 21 is connected with the controller 11 to detect switch operation of an ignition and the like. A door opening and closing detection unit 22, serving as a fully closed state detection means typified by a courtesy SW and the like connected with the controller 11, detects opening and closing of the slide door 2, especially a fully closed state in which the slide door 2 is fully closed. A sensor group i 23 connected with the controller 11 detects vehicle speed, opening and closing of windows, and information indicative of a shift lever of a transmission (parking state) by corresponding sensors.

An engine controlling unit 31, controlling an engine 40 of the vehicle, is connected with the controller 11, and the controller 11 controls the engine controlling unit 31. based on whether or not the person carrying the portable unit 60 is in the vehicle. Further, a steering locking unit 32 and an immobilizer unit 33 are respectively connected with the controller 11. The steering locking unit 32 mechanically locks a steering wheel to disable the steering maneuver. The immobilizer unit 33 will not allow fuel to flow to the engine and ignition to take place when an attempt to use an unauthorized key is made.

Furthermore, a door lock unit 34 is connected with the controller 11. The door lock unit 34 is mainly comprised of a door lock apparatus locking and unlocking the slide door 2 and a door lock releasing apparatus releasing a latch mechanism of the door lock apparatus (engagement between a latch and a pawl) when unlocking the slide door 2. The controller 11 controls the door lock unit 34 based on whether or not the person carrying the portable unit 60 is in the vehicle.

A door driving unit 35 is connected with the controller 11 and serves as a driving means as typified by a door driving apparatus opening the slide door 2. The controller 11 controls the door driving unit 35 based on whether or not the person carrying the portable unit 60 is in the vehicle.

As shown in Fig. 3, a transmitting antenna 62 and a receiving antenna 63 are connected with a controller 61 via a transmitting and receiving circuit 64. The controller 61 controls various functions of the portable unit 60. For example, the transmitting antenna 62 transmits the signal having the frequency of 300 MHz to the on-board unit 10 and the receiving antenna 63 receives the signals having the frequency of 134 KHz (vehicle outside and inside request signals) transmitted from the on-board unit 10.

A memory 65 is connected with the controller 61, and various different codes such as a request code or a transponder ID code are stored in the memory 65. Meanwhile, the memory 65 is a nonvolatile memory such as an EEPROM and is able to maintain the stored data when the power source is shut off.

The controller 61 loads the transponder ID code from the memory 65 and transmits the transponder ID code to a transmitting and receiving circuit 64. Then, the transponder ID code is modulated to the signal having the frequency of 300 MHz to be transmitted to the on-board unit 10 from the transmitting antenna 62. Further, the signals having the frequency of 134 KHz transmitted from the on-board unit 10 are demodulated in the transmitting and receiving circuit 64 to be output as the request codes to the controller 11.

In the configuration described above, the controller 11 of the on-board unit 10 outputs the request codes to the first and second transmitting units 14 and 16. Then, the request codes are modulated to the request signals having the frequency of 134 KHz and the request signal is transmitted to the portable unit 60 in the inside or the outside of the vehicle from the first and second transmitting antenna 13 and 15. The request signals from the first and second transmitting antenna 13 and 15 are received by the receiving antenna 63 of the portable unit 60 and demodulated in the transmitting and receiving circuit 64 to be output as the request code to the controller 61. The controller 61 checks the request code against the request code loaded from the memory 65 for a match. If the request codes are matched, the controller 61 outputs the transponder ID code loaded from the memory 65 to the transmitting and receiving circuit 64. The transponder ID code is modulated to the signal having the frequency of 300 MHz in the transmitting and receiving circuit 64 and is transmitted to the receiving antenna 17 of the on-board unit 10 from the transmitting antenna 62.

The signal having the frequency of 300 MHz is received by the receiving antenna 17 and is demodulated in the receiving unit 18 to be output to the controller 11 as the transponder ID code. The controller 11 checks the transponder ID code against the transponder ID code loaded from the memory 19 for a match and determines whether or not the portable unit 60 and the on-board unit 10 authenticate each other.

For example, in the condition that the door opening and closing detection unit 22 detects the fully closed state of the slide door 2 and the on-board unit 10 and the portable unit 60 authenticate each other, if the vibration sensor 4 detects the vibration, in other words, the command for the opening operation of the slide door 2 is detected, the controller 11 outputs a driving signal to the door lock unit 34 to unlock the slide door 2 and release the latch mechanism. Further, the controller 11 outputs a driving signal to the door driving unit 35 to open the slide door 2.

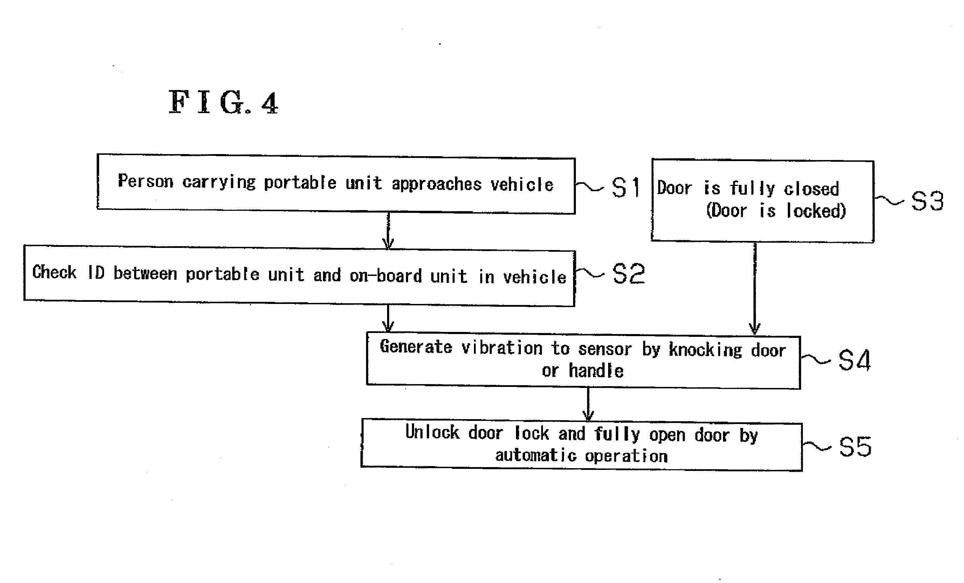

Fig. 4 is a flowchart schematically showing an operational flow of the embodiment. As shown in Fig. 4, when the person (legitimate user) carrying the portable unit 60 approaches the vehicle (Step S1), ID cods are authenticated based on the above-described communication between the on-board unit 10 and the portable unit 60 (Step S2). Here, the on-board unit 10 and the portable unit 60 authenticate each other, and the slide door 2 is fully closed (Step S3). The user generates the vibration in the slide door 2, the door handle 3, or the like by knocking the slide door 2, the door handle 3, or the like (Step S4) under the above-described condition, and the controller 11 drives the door lock unit 34 and the door driving unit 35. Consequently, the door lock is unlocked, and the slide door 2 is fully opened by automatic operation (Step S5).

As described above, according to the embodiment, below benefits are obtained.
(1) In the embodiment, if the user (the driver or the like) carrying the authenticated portable unit 60 generates the vibration in the slide door 2 (and the vehicle body 1), for example, by knocking the slide door 2, the vibration sensor 4 may detect the vibration as the command for the opening operation of the slide door 2. Further, the command for the opening operation of the slide door 2 is detected when the slide door 2 is fully closed, i.e. when the pinch detection is not needed. Hence, the pinch detection is not disturbed by the user's command detection. As just described, the vibration sensor 4 for the pinch detection is also used as the vibration sensor for detecting the command of the opening operation of the slide door 2, thereby reducing the number of components and man-hour, compared to when a specialized sensor is provided. Consequently, cost may be reduced. Further, the user just has to generate the vibration in the slide door 2 to command the slide door 2 to open. Thus, for example, the user may open the slide door 2 by tapping the slide door 2 with the foot, when both the hands are occupied.

(2) The vibration sensor 4 is mounted in the vicinity of the door handle 3 (the butted surface 2a), thus achieving high detection sensitivity when the opening operation of the slide door 2 is commanded by knocking the door handle 3.

(3) The vibration sensor 4 extends to a lower end portion of the slide door 2, thus achieving the high detection sensitivity when the slide door 2 is tapped with the foot. The aforementioned embodiment may be modified as below.

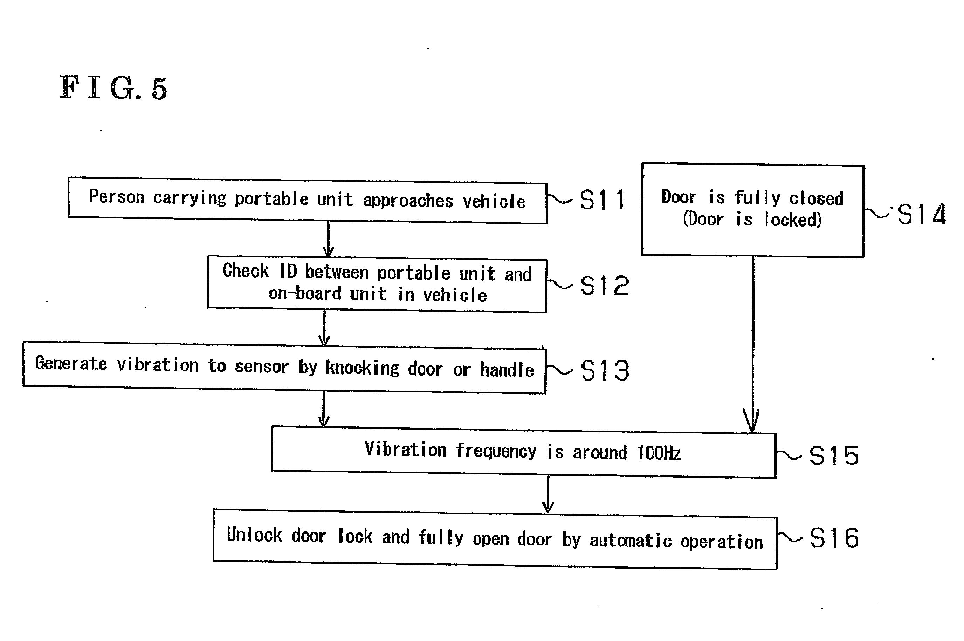

In the embodiment, the distinction may be made between the vibration of the slide door 2 and the vibration caused when the object is caught between the slide door 2 and the opening 1a by checking the frequency of the vibration. Fig. 5 is a flowchart schematically showing an operational flow of the modification enabling the aforementioned distinction method. As shown in Fig. 5, when the person (legitimate user) carrying the portable unit 60 approaches the vehicle (Step S11), ID codes are authenticated between the on-board unit 10 and the portable unit 60 (Step S12). When the on-board unit 10 and the portable unit 60 authenticate each other, the user generates the vibration in the slide door 2, the door handle 3, or the like by knocking the slide door 2, the door handle 3, or the like (Step S 13). Here, the slide door 2 is fully closed (Step S 14). If the frequency of the vibration detected by the vibration sensor 4 is around 100Hx which corresponds to the vibration of the slide door 2 and the like (Step S15), the controller 11 drives the door lock unit 34 and the door driving unit 35. Consequently, the door lock is unlocked, and the slide door 2 is fully opened by automatic operation (Step S16). In this case, even if the vibration sensor 4 for the pinch detection is also used as the vibration sensor for detecting the command for the opening operation of the slide door 2, the distinction of the vibration is made based on the frequency of the detected vibration. Therefore, false detection may be prevented in the pinch detection and the detection for the command for the opening operation.
In the vibration sensor 4 serving as the detection means, the vibration transmitted from the outside of the slide door 2 is distinguished by filtering the vibration with a band-pass filter. A filter used in the filtering is preferably selected from a bypass filter and a low pass filter, A frequency range to be filtered is around 100Hz, and the filter is selected so as to extract knocking sound that is generates by the user knocking the opening and closing body for the vehicle. The frequency of the user-generated knocking sound may vary depending on the size and the material of the opening and closing body for the vehicle. Thus, the frequency range to be filtered may be set depending on the frequency range generated by the knocking sound.

In the embodiment, the vibration sensor 4 may be mounted on the butted surface 1b of the opening 1a. In the embodiment, the vibration sensor 4 may be formed in a sheet depending on the form of the butted surface 1b or 2a. Further, a sensor detecting variations in pressure may be employed as the vibration sensor 4.

In the embodiment, a slide door, a swing door, a back door, a fuel lid or a trunk lid may be employed as the opening and closing body for the vehicle. Particularly, if the door lock unit 34 is not mounted at the opening and closing body for the vehicle, a vehicle door which conducts only the opening operation may be employed.
A control apparatus of an opening and closing body for a vehicle includes a fully closed state detection means (22) detecting a fully closed state of an opening and closing body for the vehicle (2), an authenticating means (11) authenticating a user of the vehicle, a detection means (4) detecting a command for an opening operation when the authenticating means (11) and the portable unit (60) authenticate each other, a driving means (35) conducting the opening operation when the fully closed state and the command for the open operation are detected, wherein the detection means (4) is a vibration sensor mounted at one of the opening (1a) and a butted surface of the opening and closing body for the vehicle (2), and the vibration sensor detects that an object is pinched between the opening (1) and the opening and closing body for the vehicle (2) at a closing operation.

## Claims

1. A control apparatus of an opening and closing body for a vehicle, comprising:
a fully closed state detection means (22) detecting a fully closed state of an opening and closing body for the vehicle (2) in which the opening and closing body for the vehicle (2) is fully closed, the opening and closing body for the vehicle (2) opening and closing an opening (1a) formed at a vehicle body (1);
an authenticating means (11) mounted at the vehicle and authenticating a person as a user of the vehicle by communicating with a portable unit (60);
a detection means (4) detecting a command for an opening operation of the opening and closing body for the vehicle (2) when the authenticating means (11) and the portable unit (60) authenticate each other; and
a driving means (35) conducting the opening operation of the opening and closing body for the vehicle (2) when the fully closed state of the opening and closing body for the vehicle (2) is detected by the fully closed state detection means (22) and the command for the open operation of the opening and closing body for the vehicle (2) is detected; wherein
the detection means (4) is a vibration sensor mounted at one of the opening (1a) of the vehicle body and a butted surface of the opening and closing body for the vehicle (2) with which the opening (1a) is butted when the opening and closing body for the vehicle (2) is in the fully closed state, and the vibration sensor detects that an object is pinched between the opening (1) and the opening and closing body for the vehicle (2) at the time of a closing operation.

2. A control apparatus of an opening and closing body for a vehicle according to Claim 1, wherein the detection means (4) distinguishes vibration caused by the object being pinched from vibration caused by the command for the opening operation of the opening and closing body for the vehicle (2) in the opening and closing body for the vehicle (2) or the vehicle body (1), and distinction is made based on a frequency of a vibration.

3. A control apparatus of an opening and closing body for a vehicle according to Claim 2, wherein the distinction of the vibrations is made by the detection means (4) using a band pass filter.

4. A control apparatus of an opening and closing body for a vehicle according to Claim 3, wherein one of a high pass filter and a low pass filter is used as the band pass filter for distinguishing the vibrations by the detection means (4).

5. A control apparatus of an opening and closing body for a vehicle according to Claim 4, wherein the distinction of the vibrations is made by the detection means (4) at a frequency range of 100 Hz.

6. A control apparatus of an opening and closing body for a vehicle according to Claim 5, wherein the user knocks the opening and closing body for the vehicle (2) and the vibration is caused by knocking sound generated by knocking.

7. A control apparatus of an opening and closing body for a vehicle according to Claim 1, wherein the detection means (4) is mounted at the opening and closing body for the vehicle (2) comprising the butted surface (2a) with which the opening (1a) is butted when the opening and closing body for the vehicle (2) is in the fully closed state.

8. A control apparatus of an opening and closing body for a vehicle according to Claim 1, wherein the detection means (4) is mounted at the vehicle body (1) comprising a butted surface (1a) with which the butted surface (2a) of the opening and closing body for the vehicle (2) is butted when the opening and closing body of the vehicle (2) is in the fully closed state.

9. A control apparatus of an opening and closing body for a vehicle according to Claim 1, wherein the opening and closing body for the vehicle (2) is one of a slide door, a swing door, a back door, a trunk lid and a fuel lid.

10. A control apparatus of an opening and closing body for a vehicle according to Claim 1, wherein the vibration sensor serving as the detection means (4) is a sheet formed sensor detecting pressure variations.
